# EUROPEAN PATENT APPLICATION

(11) **EP 3 190 792 A1**
(43) Date of publication of application: **12.07.2017**
(21) Application number: 17151818.6
(22) Date of filing: 27.03.2007
(51) Int. Cl.: H04N 19/176, H04N 19/61, H04N 19/593, H04N 19/11, H04N 19/80, H04N 19/85

(54) **APPARATUS AND METHOD FOR SPATIAL PREDICTION OF IMAGE DATA, APPARATUS AND METHOD FOR ENCODING AND DECODING IMAGE DATA USING THE SAME**

(30) Priority: 13.04.2006 KR 20060033582
(62) Divisional of application: 07104959.7
(71) Applicant: Samsung Electronics Co., Ltd, Gyeonggi-do 16677 (KR)
(72) Inventor: LEE, Sang-jo, Yongin-si (KR); KIM, Woo-shik, Yongin-si (KR); LEE, Si-hwa, Yongin-si (KR); KIM, Do-hyung, Yongin-si (KR)
(74) Representative: Portch, Daniel

(57) **Abstract**

Provided are an apparatus and method for spatial prediction of image data, an apparatus and method for encoding image data using the same, an apparatus and method for spatial prediction compensation of image data, and an apparatus and method for decoding image data using the same. The apparatus includes a spatial prediction unit spatially predicts pixel values of a current block of an image using neighboring blocks in a row immediately above the current block among neighboring blocks that are spatially adjacent to the current block. The spatial prediction unit performs spatial prediction after replacing pixel values of neighboring blocks in a row immediately above the current block every predetermined row unit with a predetermined reference value.

## Description

### BACKGROUND OF THE INVENTION

The present invention relates to encoding and decoding of image data, and more particularly, to an apparatus and method for spatial prediction of image data, an apparatus and method for encoding image data using the same, an apparatus and method for spatial prediction compensation of image data, and an apparatus and method for decoding image data using the same.

Conventionally, spatial prediction is required to encode image data. Intra spatial predictive encoding is a technique for predicting pixel values of a current block using spatial correlation of an image. To be more specific, the pixel values of the current block are predicted using a differential value of decoded pixel values of blocks that are adjacent to the current block and correlated with the pixel values of the current block.

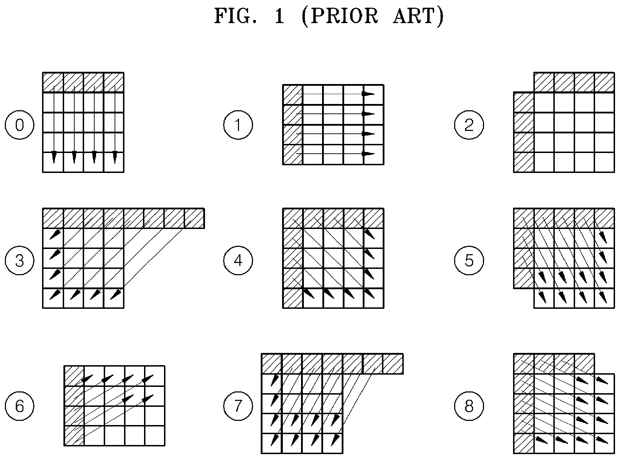

FIG. 1 illustrates eight prediction directions for conventional spatial prediction. Referring to FIG. 1, pixel values of a row immediately above or on the left side of a current block are used to perform the spatial prediction in various directions.

However, since the conventional spatial prediction is performed using pixel values of blocks on the left of the current block, it is impossible to perform real time spatial prediction and encoding.

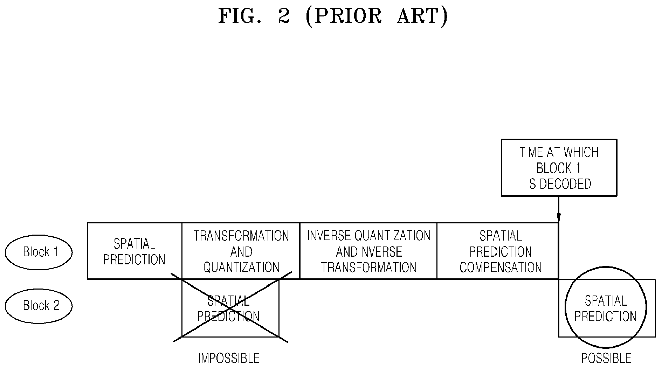

FIG. 2 illustrates a pipeline processing that is not performed using the conventional spatial prediction. The pipeline processing is a technique for performing the spatial prediction of the current block immediately after performing the spatial prediction of a previous block. However, the spatial prediction of the current block using pixel values of blocks on the left of the current block can be performed using pixel values of decoded blocks adjacent to the current block after performing the spatial prediction, transform and quantization, inverse quantization and inverse transform, and spatial prediction compensation of blocks adjacent to the current block. As illustrated in FIG. 2, the pipeline processing is not performed using pixel values of blocks on the left of the current block. Such a pipeline processing failure causes failures of a real time encoding and decoding of image data, resulting in a delay in encoding and decoding of image data.

Moreover, if an error is generated in spatial prediction of an image having an edge, the spatial prediction is performed based on the error, causing error diffusion and display quality degradation.

### SUMMARY OF THE INVENTION

The present invention provides an apparatus for spatial prediction of image data, which achieves real time encoding and prevents error diffusion.

The present invention also provides an apparatus for encoding image data, which achieves real time encoding and prevents error diffusion.

The present invention also provides an apparatus for spatial prediction compensation of image data, which makes it possible to perform real time prediction compensation on image data that is encoded in real time.

The present invention also provides an apparatus for decoding image data, which makes it possible to perform real time decoding on image data that is encoded in real time.

The present invention also provides a method for spatial prediction of image data, which achieves real time encoding and prevents error diffusion.

The present invention also provides a method for encoding image data, which achieves real time encoding and prevents error diffusion.

The present invention also provides a method for spatial prediction compensation of image data, which makes it possible to perform real time prediction compensation on image data that is encoded in real time.

The present invention also provides a method for decoding image data, which makes it possible to perform real time decoding on image data that is encoded in real time.

According to one aspect of the present invention, there is provided an apparatus for spatial prediction of image data. The apparatus includes a spatial prediction unit that spatially predicts pixel values of a current block of an image using neighboring blocks in a row immediately above the current block among neighboring blocks that are spatially adjacent to the current block. The spatial prediction unit performs spatial prediction after replacing pixel values of neighboring blocks in a row immediately above the current block every predetermined row unit with a predetermined reference value.

According to another aspect of the present invention, there is provided an apparatus for encoding image data. The apparatus includes a spatial prediction unit, a transformation and quantization unit, and a bitstream generation unit. The spatial prediction unit spatially predicts pixel values of a current block of an image using neighboring blocks in a row immediately above the current block among neighboring blocks that are spatially adjacent to the current block. The transformation and quantization unit transforms and quantizes the spatially predicted pixel values. The bitstream generation unit generates a bitstream corresponding to the transformed and quantized pixel values. The spatial prediction unit performs spatial prediction after replacing pixel values of neighboring blocks in a row immediately above the current block every predetermined row unit with a predetermined reference value.

According to another aspect of the present invention, there is provided an apparatus for spatial prediction compensation of image data. The apparatus includes a spatial prediction compensation unit that compensates for spatially predicted pixel values using neighboring blocks in a row immediately above the current block among neighboring blocks that are spatially adjacent to the current block. The spatial prediction compensation unit compensates for spatially predicted pixel values in every predetermined row unit of an image.

According to another aspect of the present invention, there is provided an apparatus for decoding image data. The apparatus includes a bitstream decoding unit, an inverse quantization and inverse transformation unit, and a spatial prediction compensation unit. The bitstream decoding unit decodes a bitstream of the image data. The inverse quantization and inverse transformation unit inversely quantizes and inversely transforms the decoded bitstream. The spatial prediction compensation unit compensates for spatially predicted pixel values using neighboring blocks in a row immediately above the current block among neighboring blocks that are spatially adjacent to the current block. The spatial prediction compensation unit compensates for spatially predicted pixel values in every predetermined row unit of an image.

According to another aspect of the present invention, there is provided a method for spatial prediction of image data. The method includes spatially predicting pixel values of a current block of an image using neighboring blocks in a row immediately above the current block among neighboring blocks that are spatially adjacent to the current block. The spatial prediction is performed after replacing pixel values of neighboring blocks in a row immediately above the current block every predetermined row unit with a predetermined reference value.

According to another aspect of the present invention, there is provided a method for encoding image data. The method includes spatially predicting pixel values of a current block of an image using neighboring blocks in a row immediately above the current block among neighboring blocks that are spatially adjacent to the current block, transforming and quantizing the spatially predicted pixel values, and generating a bitstream corresponding to the transformed and quantized pixel values. The spatial prediction is performed after replacing pixel values of neighboring blocks in a row immediately above the current block every predetermined row unit with a predetermined reference value.

According to another aspect of the present invention, there is provided a method for spatial prediction compensation of image data. The method includes compensating for spatially predicted pixel values using neighboring blocks in a row immediately above the current block among neighboring blocks that are spatially adjacent to the current block. The compensation of the spatially predicted pixel values includes compensating for spatially predicted pixel values in every predetermined row unit of an image.

According to another aspect of the present invention, there is provided a method for decoding image data. The method includes decoding a bitstream of the image data; inversely quantizing and inversely transforming the decoded bitstream, and compensating for spatially predicted pixel values using neighboring blocks in a row immediately above the current block among neighboring blocks that are spatially adjacent to the current block. The compensation of the spatially predicted pixel values includes compensating for spatially predicted pixel values in every predetermined row unit of an image.

### BRIEF DESCRIPTION OF THE DRAWINGS

The above and other features and advantages of the present invention will become more apparent by describing in detail exemplary embodiments thereof with reference to the attached drawings in which:
FIG. 1 illustrates eight prediction directions for conventional spatial prediction;
FIG. 2 illustrates a pipeline processing that is not performed using the conventional spatial prediction;
FIG. 3 is a block diagram of an apparatus for spatial prediction of image data according to the present invention;
FIG. 4 illustrates pixel values of a 4x4 block and pixel values adjacent to the 4x4 block;
FIG. 5 illustrates prediction directions for an 8x1 block that is a one-dimensional block;
FIG. 6 illustrates prediction directions for a 4x4 block that is a two-dimensional block;
FIG. 7 is a view for explaining vertical spatial prediction with respect to a one-dimensional block of an image having an edge;
FIG. 8 is a view for explaining spatial prediction after replacing pixel values of neighboring blocks of a current block in a row immediately above every predetermined row unit with a predetermined reference value;
FIG. 9 is a view for explaining spatial prediction after replacing pixel values of neighboring blocks in a row immediately above every third row with a predetermined reference value;
FIG. 10 is a view for explaining prevention of an error generated during encoding due to an edge (e.g., a cursor) of an image;
FIG. 11 is a block diagram of an apparatus for encoding image data according to the present invention;
FIG. 12 is a block diagram of an apparatus for spatial prediction compensation of image data according to the present invention;
FIG. 13 is a block diagram of an apparatus for decoding image data according to the present invention;
FIG. 14 is a flowchart illustrating a method for spatial prediction of image data according to the present invention;
FIG. 15 is a flowchart illustrating a method for encoding image data according to the present invention;
FIG. 16 is a flowchart illustrating a method for spatial prediction compensation of image data according to the present invention; and
FIG. 17 is a flowchart illustrating a method for decoding image data according to the present invention.

### DETAILED DESCRIPTION OF THE INVENTION

Hereinafter, exemplary embodiments of the present invention will be described in detail with reference to the accompanying drawings.

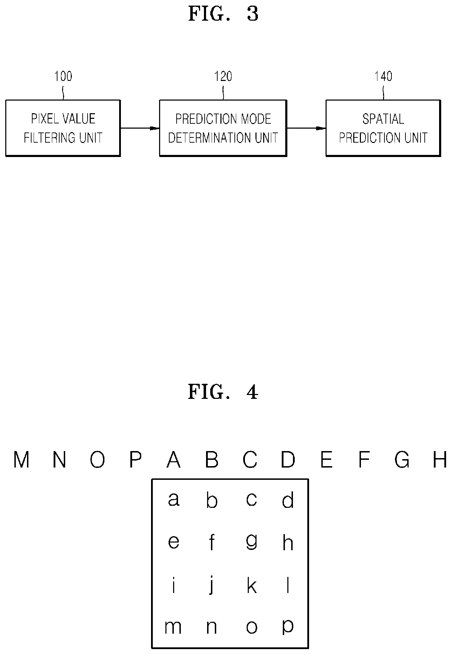

FIG. 3 is a block diagram of an apparatus for spatial prediction of image data according to the present invention. Referring to FIG. 3, the apparatus includes a pixel value filtering unit 100, a prediction mode determination unit 120, and a spatial prediction unit 140.

The pixel value filtering unit 100 filters pixel values of neighboring blocks in a row immediately above a current block, which are used for spatial prediction of the current block, among neighboring blocks that are spatially adjacent to the current block, and outputs the filtered pixel values to the prediction mode determination unit 120. The filtering is required to prevent display quality degradation caused by the spatial prediction using only the pixel values of the neighboring blocks in the row immediately above the current block.

In particular, the pixel value filtering unit 100 detects the average of pixel values adjacent to an arbitrary pixel value among the pixel values of the neighboring blocks in the row immediately above the current block as a filtered value of the arbitrary pixel value.

FIG. 4 illustrates pixel values of a 4x4 block and pixel values adjacent to the 4x4 block. The filtering will be described with reference to FIG. 4. For example, the pixel value filtering unit 100 detects the average of pixel values located on the left and right sides of a pixel value A among pixel values of neighboring blocks in a row immediately above the 4x4 block as a filtered value of the pixel value A. In other words, instead of A, one of (P+B)/2, (P+2A+B)/4, (2O+3P+6A+3B+2C)/16, etc. is used for spatial prediction. In this way, instead of B, one of (A+C)/2, (A+2B+C)/4, (2P+3A+6B+3C+2D)/16, etc. is used for spatial prediction. The other pixel values of the adjacent blocks are filtered in this manner. However, the filtering described above is only an example and filtering may be performed using more pixel values of adjacent blocks.

The prediction mode determination unit 120 determines a spatial prediction mode for the current block using the pixel values of the neighboring blocks in the row immediately above the 4x4 block and the filtered pixel values obtained by the pixel value filtering unit 100 and outputs the determined spatial prediction mode to the spatial prediction unit 140.

The prediction mode determination unit 120 determines, as a spatial prediction mode, a spatial prediction direction having the minimum sum of differential values between the pixel values of the neighboring blocks in the row immediately above the 4x4 block and the pixel values of the current block and the minimum sum of differential values between the filtered pixel values of the neighboring blocks in the row immediately above the 4x4 block and pixel values of the current block. Here, the spatial prediction direction is one of a vertical direction, a diagonal down-right direction, and a diagonal down-left direction.

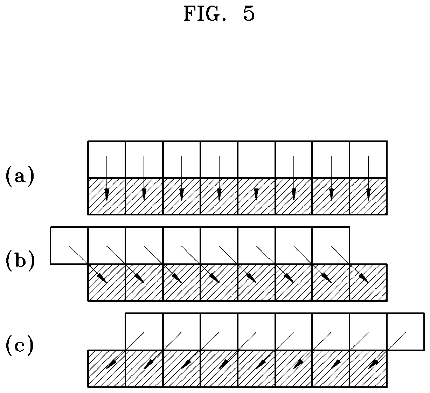

FIG. 5 illustrates prediction directions for an 8x1 block that is a one-dimensional block. The one-dimensional block means a block having one row. In FIG. 5, (a) indicates a case where the prediction direction for the 8x1 block is a vertical direction, (b) indicates a case where the prediction direction for the 8x1 block is a diagonal down-right direction, and (c) indicates a case where the prediction direction for the 8x1 block is a diagonal down-left direction. However, the spatial prediction directions illustrated in FIG. 5 are only examples and a variety of spatial prediction directions may be used.

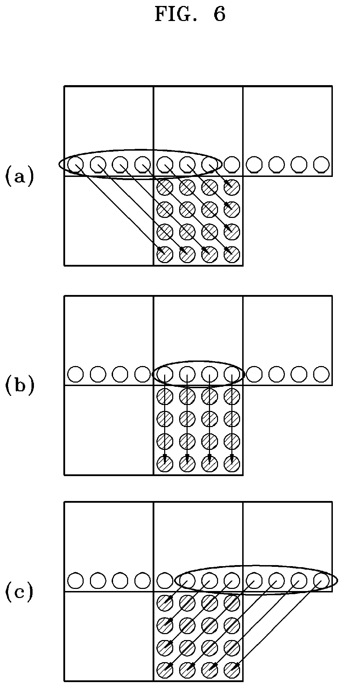

FIG. 6 illustrates prediction directions for a 4x4 block that is a two-dimensional block. The two-dimensional block means a block having at least two rows. In FIG. 6, (a) indicates a case where the prediction direction for the 4x4 block is a diagonal down-right direction, (b) indicates a case where the prediction direction for the 4x4 block is a vertical direction, and (c) indicates a case where the prediction direction for the 4x4 block is a diagonal down-left direction. However, the spatial prediction directions illustrated in FIG. 6 are only examples and a variety of spatial prediction directions may be used.

The spatial prediction mode includes a first prediction mode for prediction using the filtered pixel values of the neighboring blocks in the row immediately above the 4x4 block in the vertical direction, a second prediction mode for prediction using the original pixel values of the neighboring blocks that are not filtered in the vertical direction, a third prediction mode for prediction using the filtered pixel values of the neighboring blocks in the row immediately above the 4x4 block in the diagonal down-right direction, and a fourth prediction mode for prediction using the filtered pixel values of the neighboring blocks in the row immediately above the 4x4 block in the diagonal down-left direction. The spatial prediction mode may further include a fifth prediction mode for prediction using the original pixel values of the neighboring blocks that are not filtered in the diagonal down-right direction and a sixth prediction mode for prediction using the original pixel values of the neighboring blocks that are not filtered in the diagonal down-left direction. The number of spatial prediction modes may increase when the spatial prediction directions are further segmented in addition to the vertical direction, the diagonal down-right direction, and the diagonal down-left direction.

The determination of the spatial prediction mode will be described with reference to FIGS. 4 and 5. At this time, the prediction mode is assumed to be one of the first through fourth prediction modes. The prediction mode determination unit 120 obtains differential values between pixel values of the current block along the vertical direction and pixel values of an adjacent block along the vertical direction in a row immediately above the current block. The obtained differential values are a₁=a-A, b₁=b-B, c₁=c-C, d₁=d-D, e₁=e-A, f₁=f-B, g₁=g-C, h₁=h-D, i₁=i-A, j₁=j-B, k₁=k-C, l₁=l-D, m₁=m-A, n₁=n-B, o₁=o-C, and p₁=p-D. It is assumed that sums of absolute values of differential values for R, G, and B along the vertical direction are S11, S₁₂, and S₁₃.

If the filtered pixel values are A', B', C', D', E', F', G', H', M', N', O', and P', the prediction mode determination unit 120 obtains differential values between pixel values of the current block along the vertical direction and the filtered pixel values. The obtained differential values are a₂=a-A', b₂=b-B', c₂=c-C', d₂=d-D', e₂=e-A', f₂=f-B', g₂=g-C', h₂=h-D', i₂=i-A', j₂=j-B', k₂=k-C', l₂=l-D', m₂=m-A', n₂=n-B', o₂=o-C', and p₂=p-D'. It is assumed that sums of absolute values of differential values for R, G, and B along the vertical direction are S₂₁, S₂₂, and S₂₃.

The prediction mode determination unit 120 also obtains differential values between pixel values of the current block along the diagonal down-right direction and the filtered pixel values of pixel values of adjacent blocks along the diagonal down-right direction in the row immediately above the current block. The obtained differential values are a₃=a-P', b₃=b-A', c₃=c-B', d₃=d-C', e₃=e-C', f₃=f-P', g₃=g-A', h₃=h-B', i₃=i-N', j₃=j-O' k₃=k-P', l₂=l-A', m₃=m-M', n₃=n-N', o₃=o-O', and p₃=p-P'. It is assumed that sums of absolute values of differential values for R, G, and B along the diagonal down-right direction are S₄, S₅, and S₆.

The prediction mode determination unit 120 also obtains differential values between pixel values of the current block along the diagonal down-left direction and the filtered pixel values of pixel values of adjacent blocks along the diagonal down-left direction in the row immediately above the current block. The obtained differential values are a₄=a-B', b₄=b-C', c₄=c-D', d₄=d-E', e₄=e-C', f₄=f-D', g₄=g-E', h₄=h-FB', i₄=i-D', j₄=j-E', k₄=k-F', l₄=l-G', m₄=m-E', n₄=n-F', o₄=o-G', and p₄=p-H'. It is assumed that sums of absolute values of differential values for R, G, and B along the diagonal down-right direction are S₇, S₈, and S₉.

The prediction mode determination unit 120 determines spatial prediction directions having the minimum values among S₁₁, S₁₂, S₁₃, S₂₁, S₂₂, S₂₃, S₄, S₅, S₆, S₇, S₈, and S₉ for R, G, and B as spatial prediction modes for R, G, and B.

At this time, different spatial prediction modes may be determined for R, G, and B, or a common spatial prediction mode may be determined for R, G, and B.

In other words, a spatial prediction direction having the minimum value among S₁₁, S₂₁, S₄, and S₇ may be determined as a spatial prediction mode for R, a spatial prediction direction having the minimum value among S₁₂, S₂₂, S₅, and S₈ may be determined as a spatial prediction mode for G, and a spatial prediction direction having the minimum value among S₁₃, S₂₃, S₆, and S₉ may be determined as a spatial prediction mode for B.

In addition, a common spatial prediction mode having the minimum value among Sᵥ₁= S₁₁+S₁₂+S₁₃, Sᵥ₂= S₂₁+S₂₂+S₂₃, S_{R}= S₄+S₅+S₆, and S_{L}= S₇+S₈+S₉ may be determined for R, G, and B.

When a sum of the sums for R, G, and B is obtained, different weights may be applied to the sums. For example, different weights may be applied to S₁₁, S₁₂, and S₁₃. In other words, Sᵥ₁= 0.3xS₁₁+0.6xS₁₂+0.1xS₁₃. This is because processing of G is important in image processing. The explained weights are only examples, and various weights may be applied.

The spatial prediction unit 140 spatially predicts the pixel values of the current block using neighboring blocks in a row immediately above the current block. Unlike in the prior art, the spatial prediction unit 140 according to the present invention uses only pixel values of neighboring blocks in a row immediately above the current block for spatial prediction. The spatial prediction direction may be one of the vertical direction, the diagonal down-right direction, and the diagonal down-left direction, as mentioned above.

The spatial prediction unit 140 may spatially predicts pixel values of a one-dimensional block or a two-dimensional block. FIG. 5 illustrates prediction directions for a one-dimensional block and FIG. 6 illustrates prediction directions for a two-dimensional block.

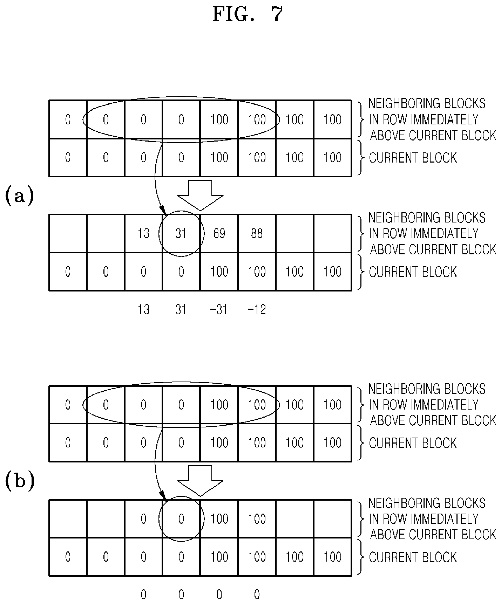

FIG. 7 is a view for explaining vertical spatial prediction with respect to a one-dimensional block of an image having an edge.

In (a) of FIG. 7, pixel values 0, 0, 100, and 100 of neighboring blocks of the current block in a row immediately above the current block are filtered by the pixel value filtering unit 100 and thus are replaced with filtered pixel values 13, 31, 69, and 88. Spatially predicted values 13, 31, -31, and -12 can be obtained from differential values between the filtered pixel values and pixel values of the current block.

In (b) of FIG. 7, spatially predicted values 0, 0, 0, and 0 are obtained from pixel values 0, 0, 100, and 100 of neighboring blocks of the current block in a row immediately above the current block and pixel values of the current block. Spatial prediction using filtered pixel values of pixel values of the neighboring blocks in a row immediately above the current block in an image having an edge has lower coding efficiency than spatial prediction using the original pixel values of the neighboring blocks. The prediction mode determination unit 120 determines a prediction mode having higher coding efficiency as a spatial prediction mode. In other words, the prediction mode determination unit 120 determines, as a spatial prediction mode, a prediction mode in which prediction is performed using the original pixel values of the neighboring blocks along the vertical direction, i.e., the second prediction mode. The spatial prediction unit 140 then obtains spatially predicted values from differential values between the original pixel values of the neighboring blocks along the vertical direction and pixel values of the current block along the vertical direction according to the determined second prediction mode.

The spatial prediction unit 140 replaces pixel values of neighboring blocks in a row immediately above the current block every predetermined row unit of an image with a predetermined reference value for spatial prediction.

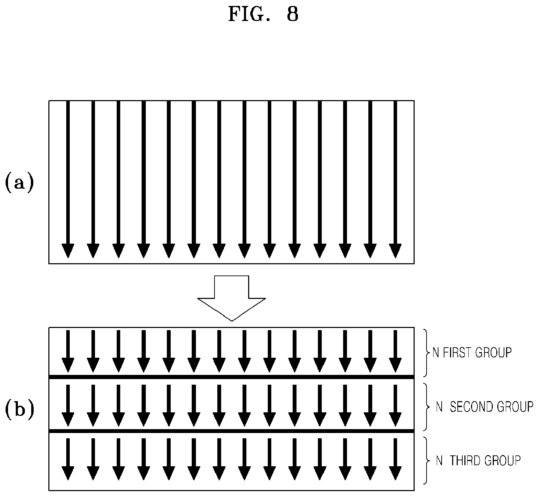

In (a) of FIG. 8, spatial prediction is performed based on pixel values of neighboring blocks of the current block in a row immediately above the current block over the entire image like in the prior art.

In (b) of FIG. 8, each N rows of an image are grouped and, if spatial prediction with respect to a first group including N rows is completed, spatial prediction with respect to the first row of a second group is performed using a predetermined reference value as pixel values of neighboring blocks in a row immediately above the current block, instead of using pixel values in the last row of the first group. Similarly, once spatial prediction with respect to the second group is completed, pixel values in the first row of the third group are spatially predicted using the predetermined reference value, instead of using pixel values in the last row of the second group.

The predetermined reference value is set based on an intermediate gray scale among gray scales of an image. For example, if the gray scales of an image range from 0 to 255, an intermediate gray scale of 128 is used as the predetermined reference value. Thus, differential values between pixel values in the first row of each group and the predetermined reference value, e.g., 128, are obtained as spatially predicted pixel values.

As illustrated in (b) of FIG. 8, by performing spatial prediction after replacing pixel values of neighboring blocks in a row immediately above the current block every predetermined row unit (here, N rows) with a predetermined reference value, it is possible to prevent an error generated during spatial prediction with respect to an image having an edge from be diffused.

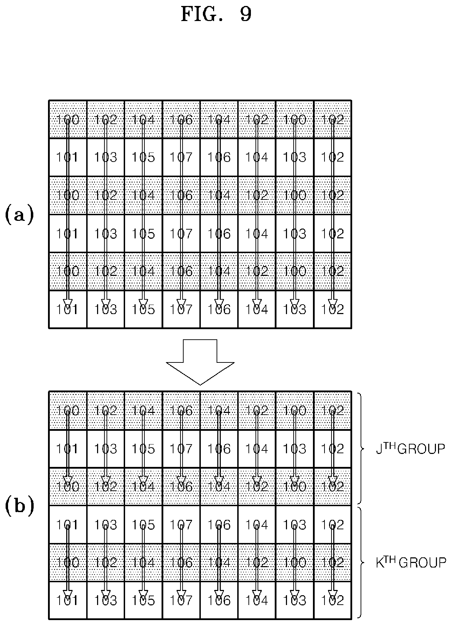

FIG. 9 is a view for explaining spatial prediction after replacing pixel values of neighboring blocks in a row immediately above every third row with a predetermined reference value. In (a) of FIG. 9, spatial prediction is performed according to the prior art. In (b) of FIG. 9, each three rows of an image are grouped and, if spatial prediction with respect to a j^{th} group is completed, spatial prediction with respect to the first row of a k^{th} group are performed by using a predetermined reference value, i.e., 128, as pixel values of neighboring blocks in a row immediately above the first row of the k^{th} group, instead of using pixel values in the last row of the j^{th} group and obtaining differential values between pixel values in the first row of the k^{th} group and the predetermined reference value.

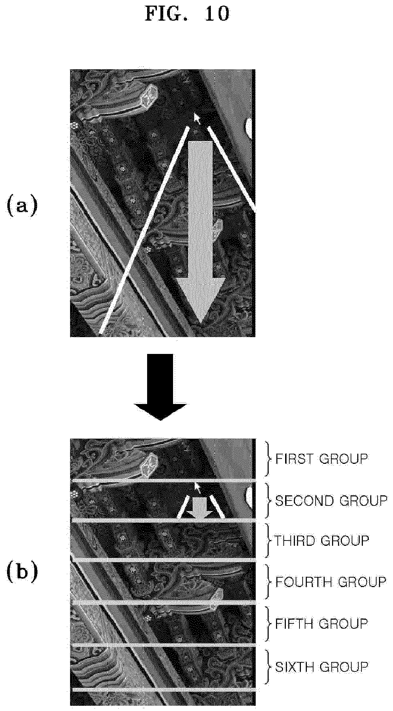

FIG. 10 is a view for explaining prevention of an error generated during encoding due to an edge (e.g., a cursor) of an image. In (a) of FIG. 10, an error generated in a position including a cursor is diffused during encoding of a portion of the image below the cursor. In (b) of FIG. 10, by replacing pixel values of neighboring blocks in a row immediately above every predetermined row unit with a predetermined reference value, error diffusion can be defined within a second group having a cursor. In this way, by preventing error diffusion in spatial prediction with respect to an edge of an image, display quality degradation can be avoided.

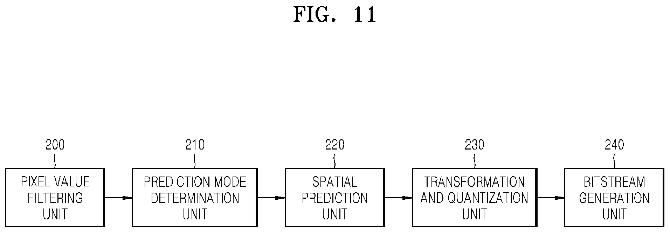

Hereinafter, an apparatus for encoding image data according to the present invention will be described with reference to FIG. 11.

FIG. 11 is a block diagram of an apparatus for encoding image data according to the present invention. Referring to FIG. 11, the apparatus includes a pixel value filtering unit 200, a prediction mode determination unit 210, a spatial prediction unit 220, a transformation and quantization unit 230, and a bitstream generation unit 240.

The pixel value filtering unit 200 filters pixel values of neighboring blocks in a row immediately above a current block, which are used for spatial prediction of the current block, and outputs the filtered pixel values to the prediction mode determination unit 210. The pixel value filtering unit 200 detects the average of pixel values adjacent to an arbitrary pixel value among the pixel values of the neighboring blocks in the row immediately above the current block as a filtered value of the arbitrary pixel value. The pixel value filtering unit 200 has the same function as the pixel value filtering unit 100 and thus will not be described in detail.

The prediction mode determination unit 210 determines a spatial prediction mode for the current block using the pixel values of the neighboring blocks in the row immediately above the current block and the filtered pixel values obtained by the pixel value filtering unit 200 and outputs the determined spatial prediction mode to the spatial prediction unit 220.

The prediction mode determination unit 210 determines, as a spatial prediction mode, a spatial prediction direction having the minimum sum of differential values between the pixel values of the neighboring blocks in the row immediately above the current block and the pixel values of the current block and the minimum sum of differential values between the filtered pixel values of the neighboring blocks in the row immediately above the current block and the pixel values of the current block.

Here, the spatial prediction direction is one of a vertical direction, a diagonal down-right direction, and a diagonal down-left direction. The spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.

The spatial prediction mode may further include a fifth prediction mode for prediction using the original pixel values of the neighboring blocks that are not filtered in the diagonal down-right direction and a sixth prediction mode for prediction using the original pixel values of the neighboring blocks that are not filtered in the diagonal down-left direction. The number of spatial prediction modes may increase when the spatial prediction directions are further segmented in addition to the vertical direction, the diagonal down-right direction, and the diagonal down-left direction. The prediction mode determination unit 210 has the same function as the prediction mode determination unit 120 and thus will not be described in detail.

The spatial prediction unit 220 spatially predicts the pixel values of the current block using neighboring blocks in a row immediately above the current block. The spatial prediction unit 220 according to the present invention uses only pixel values of neighboring blocks in a row immediately above the current block for spatial prediction. The spatial prediction direction may be one of the vertical direction, the diagonal down-right direction, and the diagonal down-left direction, as mentioned above. The spatial prediction unit 220 may spatially predicts pixel values of a one-dimensional block or a two-dimensional block. FIG. 5 illustrates prediction directions for a one-dimensional block and FIG. 6 illustrates prediction directions for a two-dimensional block.

The spatial prediction unit 220 performs spatial prediction after replacing pixel values of neighboring blocks in a row immediately above every predetermined row unit with a predetermined reference value. The predetermined reference value is set based on an intermediate gray scale among gray scales of an image. For example, if the gray scales of an image range from 0 to 255, an intermediate gray scale of 128 is used as the predetermined reference value. Thus, differential values between pixel values in the first row of each group and the predetermined reference value, e.g., 128, are obtained as spatially predicted pixel values. The spatial prediction unit 220 has the same function as the spatial prediction 140 and thus will not be described in detail.

The transformation and quantization unit 230 transforms and quantizes spatially predicted pixel values and outputs transformed and quantized pixel values to the bitstream generation unit 240. The transformation may be orthogonal transformation encoding. Discrete cosine transform (DCT) is most widely used as orthogonal transformation encoding. DCT transforms an image signal at a time axis into that at a frequency axis like in fast Fourier transform (FFT) and uses a discrete cosine function as a transformation coefficient. DCT performs transformation with respect to several frequency domains having a large signal power and a small signal power in the image signal at a time axis. Since the power of the image signal concentrates in a low frequency region, quantization with appropriate bit assignment can lead to data compression with a small number of bits.

The bitstream generation unit 240 generates a bitstream corresponding to the transformed and quantized pixel values according to a prediction mode.

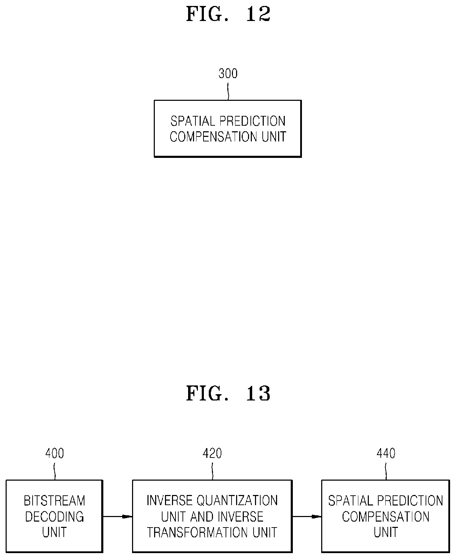

Hereinafter, an apparatus for spatial prediction compensation of image data according to the present invention will be described with reference to FIG. 12.

FIG. 12 is a block diagram of an apparatus for spatial prediction compensation of image data according to the present invention. Referring to FIG. 12, the apparatus corresponds to a spatial prediction compensation unit 300.

The spatial prediction compensation unit 300 compensates for spatially predicted pixel values only using pixel values of neighboring blocks in a row immediately above the current block. The spatially predicted pixel values are obtained by the spatial prediction units 140 and 210 only using pixel values of neighboring blocks in a row immediately above the current block. During decoding of the spatially predicted pixel values, the spatial prediction compensation unit 300 compensates for the spatially predicted pixel values only using the pixel values of neighboring blocks in a row immediately above the current block according to an inverse process to that performed in the spatial prediction units 140 and 210.

In particular, the spatial prediction compensation unit 300 compensates for spatially predicted pixel values in every predetermined row unit of an image. In other words, the spatial prediction compensation unit 300 compensates for pixel values that are spatially predicted after replacing pixel values of neighboring blocks in a row immediately above every predetermined row unit with a predetermined reference value (e.g., an intermediate gray scale among gray scales of the image).

Hereinafter, an apparatus for decoding image data will be described in detail with reference to FIG. 13.

FIG. 13 is a block diagram of an apparatus for decoding image data according to the present invention. Referring to FIG. 13, the apparatus includes a bitstream decoding unit 400, an inverse quantization and inverse transformation unit 420, and a spatial prediction compensation unit 440.

The bitstream decoding unit 400 decodes a bitstream of image data and outputs a decoded bitstream to the inverse quantization and inverse transformation unit 420.

The inverse quantization and inverse transformation unit 420 inversely quantizes and inversely transforms the decoded bitstream and outputs inversely quantized and inversely transformed image data to the spatial prediction compensation unit 440. The inverse quantization and inverse transformation unit 420 inversely quantizes and inversely transforms the decoded bitstream according to an inverse process to a transformation and quantization process.

The spatial prediction compensation unit 440 compensates for pixel values that are spatially predicted only using pixel values of neighboring blocks in a row immediately above the current block. The spatially predicted pixel values are obtained by the spatial prediction units 140 and 210 only using pixel values of neighboring blocks in a row immediately above the current block. During decoding of the spatially predicted pixel values, the spatial prediction compensation unit 440 compensates for the spatially predicted pixel values only using the pixel values of neighboring blocks in a row immediately above the current block according to an inverse process to that performed in the spatial prediction units 140 and 210.

In particular, the spatial prediction compensation unit 440 compensates for spatially predicted pixel values in every predetermined row unit of an image. In other words, the spatial prediction compensation unit 440 compensates for pixel values that are spatially predicted after replacing pixel values of neighboring blocks in a row immediately above every predetermined row unit with a predetermined reference value (e.g., an intermediate gray scale among gray scales of the image).

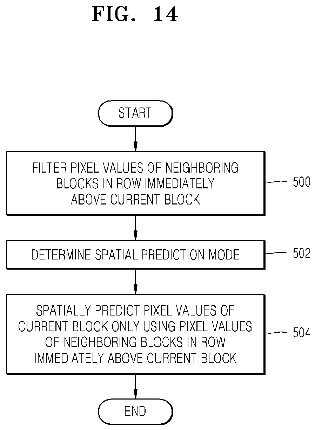

FIG. 14 is a flowchart illustrating a method for spatial prediction of image data according to the present invention.

In operation 500, pixel values of neighboring blocks of the current block in a row immediately above the current block are filtered. The filtering is required to prevent display quality degradation caused by the spatial prediction using only the pixel values of the neighboring blocks in the row immediately above the current block. In particular, the average of pixel values adjacent to an arbitrary pixel value among the pixel values of the neighboring blocks in the row immediately above the current block is detected as a filtered value of the arbitrary pixel value. The filtering of the pixel values of the neighboring blocks is already described and thus will not be described at this time.

In operation 502, a spatial prediction mode for the current block is determined using the pixel values of the neighboring blocks and the filtered pixel values. A spatial prediction direction having the minimum sum of differential values between the pixel values of the neighboring blocks in the row immediately above the current block and the pixel values of the current block and the minimum sum of differential values between the filtered pixel values of the neighboring blocks in the row immediately above the current block and the pixel values of the current block is determined as a spatial prediction mode for the current block. Here, the spatial prediction direction is one of a vertical direction, a diagonal down-right direction, and a diagonal down-left direction.

The spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.

The spatial prediction mode may further include a fifth prediction mode for prediction using the original pixel values of the neighboring blocks that are not filtered in the diagonal down-right direction and a sixth prediction mode for prediction using the original pixel values of the neighboring blocks that are not filtered in the diagonal down-left direction. The number of spatial prediction modes may increase when the spatial prediction directions are further segmented in addition to the vertical direction, the diagonal down-right direction, and the diagonal down-left direction. The determination of the spatial prediction mode is already described and thus will not be described at this time.

In operation 504, pixel values of the current block are spatially predicted in the determined spatial prediction mode using neighboring blocks of the current block in a row immediately above the current block. The spatial prediction direction may be one of the vertical direction, the diagonal down-right direction, and the diagonal down-left direction, as mentioned above. Spatial prediction may be performed on a one-dimensional block or a two-dimensional block. FIG. 5 illustrates prediction directions for a one-dimensional block and FIG. 6 illustrates prediction directions for a two-dimensional block.

In particular, spatial prediction is performed after replacing pixel values of neighboring blocks in a row immediately above every predetermined row unit with a predetermined reference value. The predetermined reference value is set based on an intermediate gray scale among gray scales of an image. For example, if the gray scales of an image range from 0 to 255, an intermediate gray scale of 128 is used as the predetermined reference value. Thus, differential values between pixel values in the first row of each group and the predetermined reference value, e.g., 128, are obtained as spatially predicted pixel values. The spatial prediction only using neighboring blocks of the current block in a row immediately above the current block is already described and thus will not be described in detail at this time.

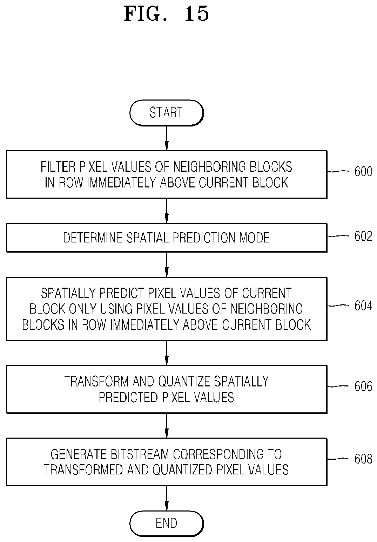

Hereinafter, a method for encoding image data according to the present invention will be described in detail with reference to FIG. 15.

FIG. 15 is a flowchart illustrating a method for encoding image data according to the present invention.

In operation 600, pixel values of neighboring blocks of the current block in a row immediately above the current block are filtered. The filtering is required to prevent display quality degradation caused by the spatial prediction using only the pixel values of the neighboring blocks in the row immediately above the current block. In particular, the average of pixel values adjacent to an arbitrary pixel value among the pixel values of the neighboring blocks in the row immediately above the current block is detected as a filtered value of the arbitrary pixel value. The filtering of the pixel values of the neighboring blocks is already described and thus will not be described at this time.

In operation 602, a spatial prediction mode for the current block is determined using the pixel values of the neighboring blocks and the filtered pixel values. A spatial prediction direction having the minimum sum of differential values between the pixel values of the neighboring blocks in the row immediately above the current block and the pixel values of the current block and the minimum sum of differential values between the filtered pixel values of the neighboring blocks in the row immediately above the current block and the pixel values of the current block is determined as a spatial prediction mode for the current block. Here, the spatial prediction direction is one of a vertical direction, a diagonal down-right direction, and a diagonal down-left direction. The spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.

The spatial prediction mode may further include a fifth prediction mode for prediction using the original pixel values of the neighboring blocks that are not filtered in the diagonal down-right direction and a sixth prediction mode for prediction using the original pixel values of the neighboring blocks that are not filtered in the diagonal down-left direction. The number of spatial prediction modes may increase when the spatial prediction directions are further segmented in addition to the vertical direction, the diagonal down-right direction, and the diagonal down-left direction. The determination of the spatial prediction mode is already described and thus will not be described at this time.

In operation 604, pixel values of the current block are spatially predicted in the determined spatial prediction mode using neighboring blocks of the current block in a row immediately above the current block. The spatial prediction direction may be one of the vertical direction, the diagonal down-right direction, and the diagonal down-left direction, as mentioned above. Spatial prediction may be performed on a one-dimensional block or a two-dimensional block. FIG. 5 illustrates prediction directions for a one-dimensional block and FIG. 6 illustrates prediction directions for a two-dimensional block.

In particular, spatial prediction is performed after replacing pixel values of neighboring blocks in a row immediately above every predetermined row unit with a predetermined reference value. The predetermined reference value is set based on an intermediate gray scale among gray scales of an image. For example, if the gray scales of an image range from 0 to 255, an intermediate gray scale of 128 is used as the predetermined reference value. Thus, differential values between pixel values in the first row of each group and the predetermined reference value, e.g., 128, are obtained as spatially predicted pixel values. The spatial prediction only using neighboring blocks of the current block in a row immediately above the current block is already described and thus will not be described in detail at this time.

In operation 606, the spatially predicted pixel values are transformed and quantized. The transformation may be orthogonal transformation encoding. Discrete cosine transform (DCT) is most widely used as orthogonal transformation encoding.

In operation 608, a bitstream corresponding to the transformed and quantized pixel values is generated. The bitstream is generated using lossy encoding or lossless encoding.

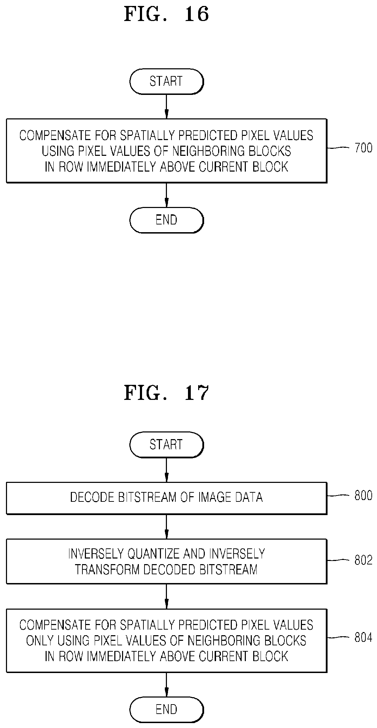

Hereinafter, a method for spatial prediction compensation of image data according to the present invention will be described in detail with reference to FIG. 16.

FIG. 16 is a flowchart illustrating a method for spatial prediction compensation of image data according to the present invention.

In operation 700, spatially predicted pixel values are compensated for using pixel values of neighboring blocks in a row immediately above the current block. The spatially predicted pixel values are obtained only using the pixel values of neighboring blocks in a row immediately above the current block. During decoding of the spatially predicted pixel values, the spatially predicted pixel values are compensated for only using the pixel values of neighboring blocks in a row immediately above the current block according to an inverse process to spatial prediction.

In particular, spatially predicted pixel values in every predetermined row unit of an image are compensated for. In operation 700, pixel values that are spatially predicted after replacing pixel values of neighboring blocks in a row immediately above every predetermined row unit with a predetermined reference value (e.g., an intermediate gray scale among gray scales of the image) are compensated for.

Hereinafter, a method for decoding image data according to the present invention will be described in detail with reference to FIG. 17.

FIG. 17 is a flowchart illustrating a method for decoding image data according to the present invention.

In operation 800, a bitstream of image data is decoded.

In operation 802, the decoded bitstream is inversely quantized and inversely transformed. The decoded bitstream is inversely quantized and inversely transformed according to an inverse process to transformation and quantization.

In operation 804, spatially predicted pixel values are compensated for using pixel values of neighboring blocks in a row immediately above the current block. The spatially predicted pixel values are obtained only using the pixel values of neighboring blocks in a row immediately above the current block. During decoding of the spatially predicted pixel values, the spatially predicted pixel values are compensated for only using the pixel values of neighboring blocks in a row immediately above the current block according to an inverse process to spatial prediction. In particular, spatially predicted pixel values in every predetermined row unit of an image are compensated for. In operation 804, pixel values that are spatially predicted after replacing pixel values of neighboring blocks in a row immediately above every predetermined row unit with a predetermined reference value (e.g., an intermediate gray scale among gray scales of the image) are compensated for.

The present invention can also be embodied as computer readable code/instructions/program and can be implemented on general-purpose digital computers executing the code/instructions/program using a computer-readable recording medium. Examples of the computer readable recording medium include magnetic storage media such as read-only memory (ROM), floppy disks, hard disks, and magnetic tapes, optical data storage devices such as CD-ROMs, digital versatile disks (DVDs), and carrier waves like transmission over the Internet. The embodiments of the present invention can be implemented as a medium (media) having included therein computer-readable code and be distributed over network coupled computer systems so that the computer readable code is stored and executed in a distributed fashion. Also, functional programs, code, and code segments for implementing the present invention can be easily construed by programmers skilled in the art.

As described above, according to the present invention, a pipeline processing is possible in spatial prediction, thereby achieving real-time encoding and decoding corresponding thereto.

In particular, by using the apparatus for spatial prediction of image data and the apparatus and method for encoding image data using the same, error diffusion can be prevented during spatial prediction with respect to an edge of an image, thereby making it possible to avoid display quality degradation.

While the present invention has been particularly shown and described with reference to exemplary embodiments thereof, it will be understood by those of ordinary skill in the art that various changes in form and details may be made therein without departing from the scope of the present invention as defined by the following claims.

Embodiments of the invention include the following:
[1] An apparatus for spatial prediction of image data, the apparatus comprising a spatial prediction unit (140) for spatially predicting pixel values of a current block of an image using neighboring blocks in a row immediately above the current block among neighboring blocks that are spatially adjacent to the current block, wherein the spatial prediction unit (140) is adapted to perform spatial prediction after replacing pixel values of neighboring blocks in a row immediately above the current block for every predetermined row unit with a predetermined reference value.
[2] The apparatus of [1], further comprising:
   a pixel value filtering unit (100) for filtering the pixel values of the neighboring blocks in the row immediately above the current block; and
   a prediction mode determination unit (120) for determining a spatial prediction mode for the current block using the pixel values of the neighboring blocks in the row immediately above the current block and the filtered pixel values obtained by the pixel value filtering unit (100).
[3] The apparatus of [2], wherein the pixel value filtering unit (100) is adapted to detect the average of pixel values adjacent to an arbitrary pixel value among the pixel values of the neighboring blocks in the row immediately above the current block as a filtered value of the arbitrary pixel value.
[4] The apparatus of claim [2], wherein the prediction mode determination unit (120) is adapted to determine a spatial prediction direction, which has the minimum sum of differential values between the pixel values of the neighboring blocks in the row immediately above the current block and the pixel values of the current block and the minimum sum of differential values between the filtered pixel values of the pixel values of the neighboring blocks in the row immediately above the current block and the pixel values of the current block, as the spatial prediction mode for the current block.
[5] The apparatus of [4], wherein the spatial prediction direction is one of a vertical direction, a diagonal down-right direction, and a diagonal down-left direction.
[6] The apparatus of [5], wherein the spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.
[7] The apparatus of [1], wherein an intermediate gray scale among gray scales of the image is set as the predetermined reference value.
[8] The apparatus of [1], wherein the spatial prediction unit is adapted to perform spatial prediction on pixel values of a one-dimensional block.
[9] The apparatus of any [1], wherein the spatial prediction unit is adapted to perform spatial prediction on pixel values of a two-dimensional block.
[10] An apparatus for encoding image data, the apparatus comprising:
   a spatial prediction unit (220) according to [1];
   a transformation and quantization unit (230) for transforming and quantizing the spatially predicted pixel values; and
   a bitstream generation unit (240) for generating a bitstream corresponding to the transformed and quantized pixel values.
[11] An apparatus for spatial prediction compensation of image data, the apparatus comprising a spatial prediction compensation unit (300) for compensating for spatially predicted pixel values using neighboring blocks in a row immediately above the current block among neighboring blocks that are spatially adjacent to the current block, wherein the spatial prediction compensation unit compensates for spatially predicted pixel values in every predetermined row unit of an image.
[12] An apparatus for decoding image data, the apparatus comprising:
   a bitstream decoding unit (400) for decoding a bitstream of the image data;
   an inverse quantization and inverse transformation unit (420) for inversely quantizing and inversely transforming the decoded bitstream; and
   a spatial prediction compensation unit (440) according to [11].
[13] A method of spatial prediction of image data, the method comprising spatially predicting pixel values of a current block of an image using neighboring blocks in a row immediately above the current block among neighboring blocks that are spatially adjacent to the current block, wherein the spatial prediction is performed after replacing pixel values of neighboring blocks in a row immediately above the current block for every predetermined row unit with a predetermined reference value.
[14] The method [13], further comprising:
   filtering the pixel values of the neighboring blocks in the row immediately above the current block; and
   determining a spatial prediction mode for the current block using the pixel values of the neighboring blocks in the row immediately above the current block and the filtered pixel values.
[15] The method of [14], wherein the filtering of the pixel values comprises detecting the average of pixel values adjacent to an arbitrary pixel value among the pixel values of the neighboring blocks in the row immediately above the current block as a filtered value of the arbitrary pixel value.
[16] The method of claim [14], wherein the determination of the spatial prediction mode comprises determining a spatial prediction direction, which has the minimum sum of differential values between the pixel values of the neighboring blocks in the row immediately above the current block and the pixel values of the current block and the minimum sum of differential values between the filtered pixel values of the neighboring blocks in the row immediately above the current block and the pixel values of the current block, as the spatial prediction mode for the current block.
[17] The method of [16], wherein the spatial prediction direction is one of a vertical direction, a diagonal down-right direction, and a diagonal down-left direction.
[18] The method of [17], wherein the spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.
[19] The method of any [13], wherein an intermediate gray scale among gray scales of the image is set as the predetermined reference value.
[20] The method of any [13], wherein the spatial prediction of the pixel values of the current block comprises performing spatial prediction on pixel values of a one-dimensional block.
[21] The method of any of [13], wherein the spatial prediction of the pixel values of the current block comprises performing spatial prediction on pixel values of a two-dimensional block.
[22] A method of encoding image data, the method comprising:
   spatially predicting image data according to any [13],
   transforming and quantizing the spatially predicted pixel values; and
   generating a bitstream corresponding to the transformed and quantized pixel values.
[23] A method of spatial prediction compensation of image data, the method comprising compensating for spatially predicted pixel values using neighboring blocks in a row immediately above the current block among neighboring blocks that are spatially adjacent to the current block, wherein the compensation of the spatially predicted pixel values comprises compensating for spatially predicted pixel values in every predetermined row unit of an image.
[24] A method of decoding image data, the method comprising:
   decoding a bitstream of the image data;
   inversely quantizing and inversely transforming the decoded bitstream; and
   undertaking spatial prediction compensation of image data according to [23].
[25] A computer-readable recording medium having recorded thereon a program for implementing the method of [13].

## Claims

1. An apparatus for spatial prediction of image data, the apparatus comprising
a pixel value filtering unit (100) for filtering the pixel values of the neighboring blocks in the row immediately above the current block;
a prediction mode determination unit (120) for determining a spatial prediction mode for the current block using the original pixel values of the neighboring blocks and the filtered pixel values obtained by the pixel value filtering unit (100); and
a spatial prediction unit (140) for spatially predicting pixel values of the current block of an image using the determined spatial prediction mode,
**characterized in that** the spatial prediction unit (140) is adapted to perform spatial prediction after replacing pixel values of neighboring blocks in a row immediately above the current block every predetermined row unit of the image with a predetermined reference value.

2. The apparatus of claim 1, wherein the pixel value filtering unit (100) is adapted to detect the average of pixel values adjacent to an arbitrary pixel value among the pixel values of the neighboring blocks in the row immediately above the current block as a filtered value of the arbitrary pixel value.

3. The apparatus of claim 1 or 2, wherein the prediction mode determination unit (120) is adapted to compare the minimum sum of differential values between the pixel values of the neighboring blocks in the row immediately above the current block and the pixel values of the current block and the minimum sum of differential values between the filtered pixel values of the pixel values of the neighboring blocks in the row immediately above the current block and the pixel values of the current block, and to select the spatial prediction direction which corresponds to the minimum value of the compared sums as the spatial prediction mode for the current block.

4. The apparatus of claim 3, wherein the spatial prediction direction is one of a vertical direction, a diagonal down-right direction, and a diagonal down-left direction.

5. The apparatus of claim 3, wherein the spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.

6. The apparatus of any preceding claim, wherein an intermediate gray scale among gray scales of the image is set as the predetermined reference value.

7. The apparatus of any preceding claim, wherein the spatial prediction unit is adapted to perform spatial prediction on pixel values of a one-dimensional block.

8. The apparatus of any of claims 1 to 6, wherein the spatial prediction unit is adapted to perform spatial prediction on pixel values of a two-dimensional block.

9. An apparatus for encoding image data, the apparatus comprising:
a pixel value filtering unit(200) for filtering pixel values of neighboring blocks in a row immediately above a current block of an image;
a prediction mode determination unit (210) for determining a spatial prediction mode for the current block using the original pixel values of the neighboring blocks and the filtered pixel values obtained by the pixel value filtering unit (200); and
a spatial prediction unit (220) according to any preceding claim;
a transformation and quantization unit (230) for transforming and quantizing the spatially predicted pixel values; and
a bitstream generation unit (240) for generating a bitstream corresponding to the transformed and quantized pixel values.

10. An apparatus for decoding image data, the apparatus comprising:
a bitstream decoding unit (400) for decoding a bitstream of the image data;
an inverse quantization and inverse transformation unit (420) for inversely quantizing and inversely transforming the decoded bitstream; and
apparatus for spatial of image data according to claim 1.

11. A method of spatial prediction of image data, the method comprising
filtering pixel values of neighboring blocks in a row immediately above a current block of an image;
determining a spatial prediction mode for the current block using the original pixel values of the neighboring blocks and the filtered pixel values; and
spatially predicting pixel values of the current block of an image using the spatial prediction mode, ,
**characterized in that** the spatial prediction unit (140) is adapted to perform spatial prediction after replacing pixel values of neighboring blocks in a row immediately above the current block every predetermined row unit of the image with a predetermined reference value.

12. The method of claim 11, wherein the filtering of the pixel values comprises detecting the average of pixel values adjacent to an arbitrary pixel value among the pixel values of the neighboring blocks in the row immediately above the current block as a filtered value of the arbitrary pixel value.

13. The method of claim 11 or 12, wherein the determination of the spatial prediction mode comprises comparing the minimum sum of differential values between the pixel values of the neighboring blocks in the row immediately above the current block and the pixel values of the current block and the minimum sum of differential values between the filtered pixel values of the neighboring blocks in the row immediately above the current block and the pixel values of the current block, and determining the spatial prediction direction which corresponds to the minimum value of the compared sums as the spatial prediction mode for the current block.

14. The method of claim 13, wherein the spatial prediction direction is one of a vertical direction, a diagonal down-right direction, and a diagonal down left direction.

15. The method of claim 14, wherein the spatial prediction mode includes a first prediction mode for prediction using the filtered pixel values of the neighboring blocks in the row immediately above the current block in the vertical direction, a second prediction mode for prediction using the original pixel values of the neighboring blocks that are not filtered in the vertical direction, a third prediction mode for prediction using the filtered pixel values of the neighboring blocks in the row immediately above the current block in the diagonal down-right direction, and a fourth prediction mode for prediction using the filtered pixel values of the neighboring blocks in the row immediately above the current block in the diagonal down-left direction.

16. The method of any of claims 11 to 15, wherein an intermediate gray scale among gray scales of the image is set as the predetermined reference value.

17. The method of any of claims 11 to 16, wherein the spatial prediction of the pixel values of the current block comprises performing spatial prediction on pixel values of a one-dimensional block.

18. The method of any of claims 11 to 16, wherein the spatial prediction of the pixel values of the current block comprises performing spatial prediction on pixel values of a two-dimensional block.

19. A method of encoding image data, the method comprising:
filtering pixel values of neighboring blocks in a row immediately above a current block of an image;
determining a spatial prediction mode for the current block using using the original pixel values of the neighboring blocks and the filtered pixel values;
spatially predicting image data according to any of claims 11 to 18;
transforming and quantizing the spatially predicted pixel values; and
generating a bitstream corresponding to the transformed and quantized pixel values.

20. A method of decoding image data, the method comprising:
decoding a bitstream of the image data;
inversely quantizing and inversely transforming the decoded bitstream; and
compensating image data using a method of spatial prediction of image data according to claim 11.

21. A computer-readable recording medium having recorded thereon a program implementing the method of any of claims 11 to 20.
